(19) **Europäisches Patentamt**

**European Patent Office**

**Office européen des brevets**

(11) **EP 0 887 369 B1**

(12) **EUROPÄISCHE PATENTSCHRIFT**

(45) Veröffentlichungstag und Bekanntmachung des Hinweises auf die Patenterteilung:
**12.03.2003 Patentblatt 2003/11**

(51) Int Cl.⁷: $C08J\ 7/16$, $C08J\ 7/18$, $C08J\ 7/04$

(21) Anmeldenummer: **98109933.6**

(22) Anmeldetag: **30.05.1998**

(54) **Verfahren zur Hydrophilierung der Oberfläche polymerer Substrate mit einem Makroinitiator als Primer**

Process for hydrophilizing surfaces of polymeric substrates using a macroinitiator as primer

Procédé pour hydrophiliser les surfaces de substrats polymères en utilisant un macroinitiateur primaire

(84) Benannte Vertragsstaaten:
**BE CH DE DK FR GB IE IT LI NL SE**

(30) Priorität: **28.06.1997 DE 19727554**

(43) Veröffentlichungstag der Anmeldung:
**30.12.1998 Patentblatt 1998/53**

(73) Patentinhaber: **Institut für Polymerforschung Dresden e.V.**
**01069 Dresden (DE)**

(72) Erfinder:
• **Anders, Christine, Dr.**
**45721 Haltern (DE)**
• **Jacobasch, Hans-Jörg, Prof. Dr.**
**01187 Dresden (DE)**
• **Steinert, Volker, Dr.**
**01099 Dresden (DE)**
• **Zschoche, Stefan, Dr.**
**01109 Dresden (DE)**

(74) Vertreter: **Rauschenbach, Marion, Dipl.-Ing. et al**
**Rauschenbach Patentanwälte**
**Postfach 27 01 75**
**01172 Dresden (DE)**

(56) Entgegenhaltungen:
| | |
|---|---|
| EP-A- 0 574 352 | EP-A- 0 632 329 |
| EP-A- 0 893 165 | WO-A-96/20796 |
| DE-A- 2 242 818 | GB-A- 872 132 |

**Beschreibung**

Die Erfindung betrifft ein Verfahren zur dauerhaften Hydrophilierung der Oberfläche polymerer Substrate mit hydrophilen Monomeren unter Verwendung eines Makroinitiators als Primer. Sie betrifft weiterhin Erzeugnisse mit derart hydrophilierten Oberflächen, die sich zur Verwendung für technische, medizinische oder biotechnische Zwecke eignen.

**1. Stand der Technik**

Polymere (oder Kunststoffe) mit einer durch eine besondere Behandlung erzeugten hydrophilen Oberfläche besitzen gegenüber den unbehandelten Polymeren mit zumeist hydrophober Oberfläche. je nach der beabsichtigten Verwendung, verschiedene Vorteile. Die höhere Oberflächenenergie bewirkt eine bessere Benetzbarkeit mit Wasser, wässerigen Lösungen oder Dispersionen sowie mit anderen Flüssigkeiten mit hoher Oberflächenspannung. Eine verbesserte Benetzbarkeit durch nachträgliche Hydrophilierung ist z.B. nützlich oder gar erforderlich, wenn eine Kunststoffoberfläche mit polaren Farbstoffen gefärbt oder bedruckt werden soll oder wenn Kunststoffoberflächen mit Hilfe eines polaren Klebers miteinander verbunden werden sollen. Auch Fasern und textile Gewebe oder Vliese aus Polymeren bedürfen zum Schlichten, Appretieren und Färben einer guten Benetzbarkeit.

Weiterhin ist die Hydrophilierung von Bedeutung bei polymeren Werkstoffen, die in wässerigen Systemen verwendet werden. So müssen technische Membranen. z.B. für die Meerwasserentsalzung, einwandfrei benetzbar sein, um ihre Trennwirkung voll entfalten zu können. Die Oberflächen von Kunststoffrohren oder chemischen Apparaten müssen gut benetzbar sein. wenn es auf guten Wärmeaustausch mit der Umgebung und/oder. bei Rohren, auf guten Durchfluß ankommt. Eine gute Benetzbarkeit ist auch für durchströmte Schüttungen von Kunststoffteilchen, z.B. Ionenaustauschharzen, sowie von porösen Schichten, z.B. z.B. Dialysemembranen, von Vorteil. Unerwünscht, weil funktionshemmend sind auch Gasblasen, die sich auf den flüssigkeitsseitigen Oberflächen von Kunststoffrohren, -schläuchen oder -behältern absetzen, weil die Oberflächen für die Flüssigkeit nicht hinreichend benetzbar sind.

Unverzichtbar sind hydrophilierte Kunststoffoberflächen bei vielen medizinischen oder biotechnischen Anwendungen, weil sie, im Gegensatz zu den von Natur aus meist hydrophoben Standardkunststoffen, mit Blut, Gewebeflüssigkeiten oder anderen Flüssigkeiten mit empfindlichen biologischen Inhaltsstoffen sehr gut verträglich sind. Beispiele für solche Anwendungen sind Blutplasmabehälter. Dialyseschläuche, Katheter, Kontaktlinsen usw.

Die Hydrophilierung von polymeren Substraten kann durch eine einoder mehrstufige physikalische und/oder chemische Behandlung bewirkt werden. Alle bekannten Behandlungsverfahren zielen darauf ab. auf der Oberfläche des polymeren Substrats hydrophile Gruppen, wie Hydroxyl-, Carboxyl- oder auch Ketogruppen, zu schaffen. Dies kann durch Verfahren erreicht werden, bei denen die hydrophilen Gruppen aus peripheren Schichten des Polymeren selbst entstehen. Alternativ oder zusätzlich können Schichten aus hydrophilen Verbindungen auf die ggf. vorbehandelte Oberfläche aufgebracht und, wenn es sich um Vinylmonomere handelt, polymerisiert werden.

Zu den einstufigen Behandlungsverfahren, die die erwünschten hydrophilen Gruppen aus dem Polymer selbst erzeugen, zählen Beflammungstechniken (D.Briggs et al., J.Mater.Sci, **14**. 1979, 1344) sowie Korona-Behandlungen (J.M.Lane et al., Progress in Organic Coatings **21**. 1993, 269-284). Die dadurch erzeugte Hydrophilie ist jedoch häufig instabil und baut sich innerhalb von Stunden oder Tagen ab. Auch Plasmaprozesse sind bekannt geworden, die die hydrophilen Gruppen in einer Stufe aus dem Polymeren selbst erzeugen. Nach W.Möhl, Kunststoffe **81** (1981), 7 werden Polyethylen oder Polypropylen mit Niederdruckplasma behandelt und eignen sich dann besser für die Herstellung von Verbundmaterialien. Ähnlich beschreiben J.F.Friedrich et al. in GAK **6/94**, Jahrgang 47, 382-388 eine Plasmavorbehandlung von Polymeren, z.B. Polyolefinen, wodurch sie besser mit Polyurethanen verklebt werden können. Plasmaprozesse ergeben befriedigende Ergebnisse, wenn man die Substrate bald nach der Behandlung verklebt. Eine Stabilisierung der hydrophilen Eigenschaften ist durch weitere Umsetzung, z.B. mit hydrophilen Monomeren, möglich. Dadurch werden chemisch gebundene hydrophile, gegebenenfalls sperrige Gruppen auf der Oberfläche erzeugt, die nicht in das Innere wandern können. Plasmaprozesse führen zudem häufig zu Erosionen, die die Oberfläche rauh machen. Das ist häufig unerwünscht, z.B. wenn die Hydrophilierung den Reibungskoeffizienten bei Kontakt mit Wasser herabsetzen soll. Eine Aufrauhung der Oberfläche verschlechtert die tribologischen Eigenschaften und wirkt diesem Ziel entgegen.

Durch eine einstufige oxidative Behandlung mit Chrom(VI)-säure entstehen an der Oberfläche von Polypropylen aus den oberflächennahen Schichten hydrophile Gruppen (Kang-Wook Lee et al. in Macromolecules 1988, 21, 309-313). Chrom(VI)-verbindungen werden in der Technik nach Möglichkeit vermieden, weil sie cancerogen sind und nicht in die Umwelt gelangen dürfen.

Bei einer Reihe weiterer bekannter Verfahren werden die hydrophilen Gruppen durch Beschichtung mit einem hydrophilem Beschichtungsmittel eingeführt. Dabei kann man Verfahren mit und ohne Vorbehandlung der Oberflächen des polymeren Substrats, z.B. mittels Laser. Plasma usw., unterscheiden (wobei die bei fast allen einschlägigen Verfahren vorgesehene anfängliche Reinigung der Oberfläche mit einem Lösungsmittel nicht als Vorbehandlung gewertet wird).

Ein Beschichtungsverfahren ohne Vorbehandlung des Substrats ist die Pfropfung von Polypropylen mit 2-Hydroxyethylmethacrylat (HEMA). die von S.R.Shukla et al. in J.Appl.Polym. Sci., Vol. **51**. 1567-74 (1994) beschrieben wurde. Wenn dabei die Polymerisation mit UV-Strahlen initiiert wird, ist die Mitverwendung von Methanol als Lösungsmittel erforderlich, das toxikologisch nicht unbedenklich ist und das Abwasser belastet. Wenn man die Polymerisation durch Uranylnitrat oder Cerammoniumnitrat auslöst, muß verhindert werden, daß die Schwermetalle Uran und Cerium in das Abwasser gelangen.

Zu den Beschichtungsverfahren ohne Vorbehandlung des Substrats zählt auch die Arbeitsweise nach B.D. Ratner et al., US-A-5 002 794, bei der man hydrophile Stoffe, wie Polyethylenglykol oder 2-Hydroxyethylmethacrylat (HEMA), mittels Plasma auf metallischen, silikatischen oder Kunststoffoberflächen abscheidet. Hydrophile Monomere. wie HEMA, polymerisieren dabei spontan unter dem Einfluß freier Radikale, die durch das Plasma entstehen. H. Mirzadeh et al., Biomaterials, **1995** Vol.4 Nr.8, 641-648, erwähnen die Pfropfung von Acrylamid oder HEMA auf ein spezielles Polymer, nämlich vulkanisierten Ethylen-Propylen-Kautschuk, mit Hilfe eines gepulsten $CO_2$-Lasers. Poly (etherimide) werden nach S.Edge et al., Polymer Bulletin 27 (1992), 441-445, ohne Vorbehandlung der Oberfläche durch photochemische Pfropfung von HEMA aus der Dampfphase hydrophiliert. Als Strahlungsquelle wird dazu eine Quecksilberdampflampe benutzt. Weiterhin läßt sich nach B.Jansen et al., J.Polymer.Sci., Polymer Symposium 66 (1979), 465-473, ein spezielles Polyurethan, Tuftan 410 von B.F. Goodrich, mit HEMA unter Bestrahlung mit Gammastrahlen von [60]Kobalt pfropfen. Ein Nachteil dieses Verfahrens sind die aufwendigen Strahlenschutzmaßnahmen. die es erfordert.

Es mag dahingestellt bleiben, ob bei den im vorhergehenden Absatz genannten Verfahren die Strahlen bzw. das Plasma nur die Polymerisation der Monomeren bewirken oder gleichzeitig auch die Oberfläche des polymeren Substrats aktivieren. Letzteres ist vermutlich der Fall, denn einerseits ist, wie zuvor erwähnt, die hydrophilierende Wirkung des Plasmas sowie der Korona-Behandlungen auf Kunststoffoberflächen bekannt. Auf jeden Fall sind die Strahlen bzw. ist das Plasma so energiereich, daß die hydrophilen Monomeren bzw. das Polymerisat daraus angegriffen werden. H.Yasuda spricht dementsprechend in J.Polym.Sci.: Macromolecular Review, Vol. 16, 199-293 (1981) von der undefinierten und nicht kontrollierbaren Chemie der Plasma-Polymerisation. Daß dabei Moleküle zerstört werden, läßt sich bei der Oberflächenbeschichtung mit HEMA dadurch nachweisen, daß die Analyse durch ESCA (Electronic Spectroscopy for Chemical Analysis) nach H.Morra et al., J.Biomed.Mat.Res., 29, 39-45 1995. geringere Werte für Sauerstoff ergibt als sie nach der Zusammensetzung von HEMA zu erwarten wären und als bei in üblicher Weise, d. h. radikalisch polymerisiertem HEMA, tatsächlich auch gefunden werden. Dies mag für manche Anwendungen unerheblich sein. Bei medizinischen oder biotechnischen Anwendungen ist jedoch eine Schicht aus intaktem HEMA sehr erwünscht, weil, wie bereits erwähnt. solche Schichten mit den empfindlichen Inhaltsstoffen der dort gehandhabten Flüssigkeiten sehr gut verträglich sind.

Es sind aber auch Verfahren bekannt geworden, bei denen der Beschichtung mit polymerisierbaren Monomeren eine aktivierende, die Kunststoffoberfläche modifizierende Strahlenbehandlung vorausgeht. Aktivierung und Beschichtung der Oberfläche werden also zeitlich getrennt. P.Gatenholm et al., Polym.Mater.Sci. 1992, 66, 445-6, beschreiben die Hydrophilierung von Filmen sowie mikroporösen Membranen aus Polypropylen durch Behandlung mit Ozon und nachfolgende Beschichtung mit HEMA, dessen Polymerisation durch Zerfall der auf der Oberfläche entstandenen Hydroperoxid-Gruppen ausgelöst wird. Nachteilig ist bei diesem Verfahren, daß Ozon in höherer Konzentration das Polymere zerstört. Schließlich beschreiben H.Thelen et al. in Fresenius, J. Anal Chem. **1995**, 353: 290-296, eine hydrophilierende Behandlung von Polyethersulfonen, bei der das Substrat zunächst mit Stickstoffplasma in Anwesenheit von geringen Mengen an Sauerstoff behandelt und dann mit HEMA beschichtet wird. Das Verfahren ist aufwendig, weil die Polyethersulfon-Membran vor der Beschichtung extrahiert werden und, wie auch bei dem Verfahren nach Gatenholm et al., aus der HEMA-Lösung Sauerstoff, der die Polymerisation inhibiert, sorgfältig ausgeschlossen werden muß. Außerdem ist bei beiden genannten Verfahren die Konzentration der Hydroperoxidgruppen auf der Oberfläche und damit die Pfropfdichte schwierig zu steuern.

In der Literatur werden weiterhin Peroxid-haltige Polymere als Makroinitiatoren beschrieben. In diesen Systemen befinden sich die photolytisch oder thermisch spaltbaren Gruppen im Polymergerüst (DE 30 44 531, EP 0 370 477). Bei der Spaltung dieser Gruppen unter Bildung von Radikalen wird das Polymergerüst zerteilt und verliert damit seine Stabilität. Ein solches Polymer kann nicht durch einfaches Tauchen unter Bildung eines dauerhaften "interpenetrating polymer network" (IPN) auf andere Substrate aufgebracht werden, da durch die Spaltung der obengenannten Gruppen kleine, aus dem Substratnetzwerk ausdiffundierende Polymerstücke gebildet werden.

In der DE-OS 22 42 818 wird die Herstellung von Polymeren mit in Seitenketten vorliegenden Peroxydiestergruppen erwähnt, für die jedoch keine spezielle Anwendung genannt wird.

## 2. Kurzbeschreibung der Erfindung

Es wurde nun überraschend gefunden, daß sich die Oberfläche von polymeren Substraten durch radikalische Polymerisation von hydrophilen Vinylmonomeren dauerhaft hydrophilieren läßt, wenn man zuvor das Substrat mit einer Losung eines Makroinitiators mit Radikale bildenden Gruppen in Seitenketten des Polymergerüstes behandelt, wobei der Makroinitiator dabei nicht durch kovalente Bindungen mit dem Substrat verbunden wird.

Gegebenenfalls werden in dem erfindungsgemäßen Verfahren vernetzende Vinylmonomere (Vernetzer) verwendet oder mitverwendet, die mindestens 2, gegebenenfalls auch 3 oder 4 olefinische Doppelbindungen aufweisen. Die vernetzenden Vinylmonomere können gleichzeitig hydrophile Vinylmonomere sein und dann allein oder zusammen mit einfach olefinisch ungesättigten, d.h. nicht vernetzenden hydrophilen Vinylmonomeren eingesetzt werden. Alternativ können die vernetzenden Vinylmonomere hydrophobe Vernetzer sein und müssen dann zusammen mit nicht vernetzenden hydrophilen Vinylmonomeren verwendet werden. Die Vernetzer können in der Lösung des Makroinitiators vorhanden sein und/oder zusammen mit nicht vernetzenden hydrophilen Vinylmonomeren angewandt werden.

### 3. Vorteile der Erfindung

Durch das Verfahren nach der Erfindung werden hydrophile Beschichtungen erzeugt, die unerwartet dauerhaft sind, obwohl keine kovalente Anbindung der Beschichtung an das polymere Substrat stattfindet. Die Bezeichnung "dauerhaft" bezieht sich sowohl auf die hydrophilierende Wirkung als auch auf die Haftfestigkeit der Beschichtung. Letztere gründet sich darauf, daß das Polymergerüst des Makroinitiators, auf das die Vinylmonomeren pfropfpolymerisiert sind, beim strahleninduzierten Zerfall der Radikale bildende Gruppen nicht zerstört wird, so daß das IPN, das sich beim Aufbringen des Makroinitiators aus seiner Lösung auf dem Substrat ausbildet, intakt bleibt.

Das Verfahren nach der Erfindung ist mit einer Reihe von Vorteilen verbunden. So ist es sehr flexibel, d.h. es können die verschiedensten hydrophoben Substrate unter Verwendung der verschiedensten Makroinitiatoren mit den verschiedensten hydrophilen Monomeren beschichtet werden, ohne daß das Verfahren in nennenswertem Umfang an die jeweiligen Verfahrensparameter adaptiert werden muß. Jede Polymeroberfläche sieht nach der Beschichtung mit dem Makroinitiator gleich aus. Das Verfahren ist einfach in der Handhabung und bedarf keiner aufwendigen Strahlungsquellen, keiner Bestrahlung in kostspieligen Vakuumapparaturen oder anderer aufwendiger Apparate. Es liefert in reproduzierbarer Weise sehr gleichmäßige Beschichtungen und eignet sich vor allem deshalb für die verschiedensten technischen, biotechnischen und medizinischen Anwendungen. Das Verfahren erfordert keine aufwendigen Vorreinigungs- und/oder Aktivierungsschritte. und es besteht keine Gefahr, daß die Oberflächen oder gar innen liegende Schichten durch aggressive Agenzien oder energiereiche Strahlen geschädigt werden. Es entstehen auch keine schwierig zu entsorgenden Abfälle, und das Verfahren ist bei Einhaltung der üblichen Vorschriften unter dem Aspekt der Arbeitssicherheit unbedenklich.

Die Verwendung oder Mitverwendung eines Vernetzers verbessert die Haftung der hydrophilen Schicht auf dem Substrat. Wenn der Vernetzer erst nach dem Aufbringen des Makroinitiators als hydrophiler Vernetzer allein oder als hydrophiler oder hydrophober Vernetzer zusammen mit einfach olefinisch ungesättigten hydrophilen Vinylmonomeren verwendet wird, kann die Hydrophilität der Beschichtung gegenüber der Hydrophilität einer Beschichtung aus vergleichbaren nicht vernetzenden hydrophilen Vinymonomeren mehr oder weniger stark beeinträchtigt sein. Es wird daher bevorzugt, den Vernetzer der Lösung des Makroinitiators zuzusetzen, weil auf diese Weise Beschichtungen erzeugt werden, die eine gute Haftung mit optimaler Hydrophilität verbinden.

### 4. Beschreibung der Erfindung

### 4.1 Die polymeren Substrate

Zu den polymeren Substraten, deren Oberflächen nach dem Verfahren der Erfindung hydrophil beschichtet werden können, zählen Homo- und Copolymere, beispielsweise Polyolefine, wie Polyethylen, Polypropylen, Polyisobutylen, Polybutadien, Polyisopren, natürliche Kautschuke und Polyethylen-co-propylen; halogenhaltige Polymere, wie Polyvinylchlorid, Polyvinylidenchlorid, Polychloropren, Polytetrafluorethylen und Polyvinylidenfluorid; Polymere und Copolymere aus vinylaromatischen Monomeren, wie Polystyrol, Polyvinyltoluol, Polystyrol-co-vinyltoluol, Polystyrol-co-acrylnitril, Polystyrol-co-butadien-co-acrylnitril; Polykondensate, beispielsweise Polyester, wie Polyethylenterephthalat und Polybutylenterephthalat; Polyamide, wie Polycaprolactam, Polylaurinlactam und das Polykondensat aus Adipinsäure und Hexamethylendiamin; Polyetherblockamide, z.B. aus Laurinlactam und Polyethylenglykol mit durchschnittlich 8, 12 oder 16 Ethylenoxygruppen; weiterhin Polyurethane, Polyether, Polycarbonate, Polysulfone, Polyetherketone, Polyesteramide und -imide. Polyacrylnitril. Polyacrylate und -methacrylate. Auch Blends aus zwei oder mehr Polymeren oder Copolymeren lassen sich nach dem Verfahren hydrophilieren, ebenso wie Kombinationen aus verschiedenen Kunststoffen, die durch Verkleben, Verschweißen oder Schmelzen miteinander verbunden sind, einschließlich der Übergangsbereiche.

Die polymeren Substrate können mannigfache geometrische Formen aufweisen, beispielsweise als Platten, Folien, Rohre oder Schläuche vorliegen, je nach der beabsichtigten Verwendung des betreffenden Erzeugnisses.

**4.2 Der Makroinitiator**

Geeignete Makroinitiatoren (oder polymere Initiatoren) enthalten in Seitenketten photolytisch oder thermisch aktivierbare, Radikale bildende Gruppen, beispielsweise Peroxid-, Hydroperoxid-. Peresteroder Azogruppen, oder Ketone. Ihre Synthese erfolgt beispielsweise durch polymeranaloge Reaktion von Carboxylgruppen-haltigen Polymeren mit Peroxyalkoholen oder mit Wasserstoffperoxid und anschließend mit Carbonsäurechloriden. Eine andere Synthese geht von Hydroxylgruppen-haltigen Polymeren aus, die mit Hydrazin umgesetzt und anschließend zur Azoverbindung oxidiert werden. Als Polymere eignen sich besonders solche, die aus Monomeren hergestellt werden, welche einerseits funktionelle Gruppen enthalten, die eine Anbindung an oder eine Umwandlung in eine photolytisch oder thermisch aktivierbare, Radikale bildende Gruppe ermöglichen, und welche andererseits homo- oder copolymerisierbar, homo- oder cokondensierbar oder homooder coaddierbar sind. Bevorzugte Polymere sind die durch Polymerisation oder Copolymerisation erhältlichen Polymeren mit Kohlenstoffgerüst. Wenn Comonomere mitverwendet werden, können die Copolymeren Blockcopolymere oder Copolymere mit statistischer oder alternierender Abfolge der Monomeren sein.

Zu den geeigneten polymerisierbaren Monomeren zählen solche mit Hydroxylgruppen, wie Hydroxyalkyl(meth)acrylate, z.B. Hydroxyethyloder 4-Hydroxybutyl(meth)acrylat; 4-Hydroxystyrol, 3-Hydroxystyrol. 2-Hydroxystyrol oder 4-Vinylresorcin. Weiterhin geeignet sind Monomere mit Carboxylgruppen, wie (Meth)acrylsäure, Maleinsäure und 4-Vinylbenzoesäure; mit Epoxy-Gruppen, wie Glycidyl(meth)acrylat; oder mit Anhydridgruppen. wie Maleinsäureanhydrid.

Geeignete Comonomere sind u.a. Vinylether, wie Vinylmethylether und Vinylbutylether; Vinylketone, wie Vinylethylketon; Olefine und Diolefine, wie 1-Buten, 1-Hexen, 1,3-Butadien, Isopren und Chloropren: Acryl- und Methacrylamid; Vinylaromaten, wie Styrol. Vinyltoluol und Divinylbenzol; und Vinylsiloxane. Diese Monomeren können sogar in überwiegender Menge vorhanden sein, z.B. bis zu 90 mol% ausmachen.

Eine gut geeignete Klasse von Makroinitiatoren basiert auf Copolymeren aus $C_3$-$C_{40}$-$\alpha$-Olefinen und Maleinsäureanhydrid oder (Meth)-acrylsäureestern bzw. säuregruppenhaltigen Comonomeren, die z.B. von Akzo Nobel Chemicals GmbH. D-52301-Düren, erhältlich sind. Bevorzugt werden Copolymere aus $C_{12}$-$C_{14}$-, $C_{16}$-$C_{18}$- und $C_{20}$-$C_{22}$-$\alpha$-Olefinen. Die Copolymeren werden mit einem Alkylhydroperoxid, z.B mit tert.-Peroxybutanol, umgesetzt, wodurch aus den funktionellen Gruppen an der Polymerkette Perestergruppen entstehen. Die Umsetzung erfolgt bei einer Temperatur unterhalb der jeweiligen Zerfallstemperatur der Peroxygruppen, in der Regel bei einer Temperatur <35°C, zweckmäßig in einem inerten Lösemittel und in Gegenwart eines tertiären Amins, wie Triethylamin.

**4.3 Die hydrophilen Vinylmonomeren**

Geeignete hydrophile Vinylmonomere enthalten eine olefinische Doppelbindung sowie mindestens eine hydrophile Gruppe. Die olefinische Doppelbindung kann in verschiedenartigen funktionalen Resten vorliegen, beispielsweise in Alkenylresten, wie Vinyl- oder Allylresten, oder in Resten, die sich von ungesättigten Carbonsäuren oder deren Derivaten ableiten, wie Acrylsäure, Methacrylsäure, den Amiden dieser Carbonsäuren oder Maleinsäure. Auch hinsichtlich der hydrophilen Gruppen herrscht große Mannigfaltigkeit. Von den geeigneten hydrophilen Gruppen seien beispielsweise genannt: Hydroxylgruppen. Ethergruppen, Acyloxygruppen, Carboxylgruppen, Carbonsäureestergruppen, Carbonsäureamidgruppen, Carboalkoxygruppen und Nitrilgruppen; 1,2-Epoxidgruppen; Schwefelsäureester-. Sulfonsäure-. Sulfinsäure-. Phosphorsäure-, Phosphonsäure- und Phosphinsäuregruppen einschließlich ihrer entsprechenden Salze und Ester; primäre, sekundäre und tertiäre Aminogruppen; Acylaminogruppen, die offenkettig oder in einen Ring eingebaut sein können; Polyalkylenoxidgruppen, wie Polyethylenoxidgruppen und Polypropylenoxidgruppen, mit oder ohne endständige Hydroxylgruppe; Polyester-, Polyesteramid- und Polyetheresteramidgruppen; sowie Reste von olefinisch funktionalisierten Zuckern. Natürlich kommt es für die Hydrophilie eines Monomeren auf die Balance zwischen hydrophilen und hydrophoben Anteilen im Molekül des Monomeren an. Für die Erfindung geeignete Monomere sind bei 20°C in Wasser zu mindestens 1 Gewichtsprozent. vorteilhaft zu mindestens 10 Gewichtsprozent und insbesondere zu mindestens 40 Gewichtsprozent löslich, jeweils bezogen auf die gesamte Lösung.

Von den geeigneten hydrophilen Vinylmonomeren seien beispielsweise genannt: Acrylsäure und deren Derivate, z.B. Acrylamid, N.N.-Dimethylacrylamid, Acrylnitril. Methylacrylat, 2-Hydroxyethylacrylat, 2-Hydroxypropylacrylat, 2-Methoxyethylacrylat; 2-Ethoxyethylacrylat und 4-Hydroxybutylacrylat, sowie Methacrylsäure und deren entsprechende Derivate; Carbonsäurevinylderivate, wie Vinylacetat, N-Vinylacetamid und N-Vinylpyrrolidon; Vinylsulfonsäuren und deren Alkalisalze, wie Natriumvinylsulfonat; Alkenylarylsulfonsäuren und deren Alkalisalze, wie Styrolsulfonsäure und Natriumstyrolsulfonat (o- und p-Isomere); Vinylether, wie Vinylmethylether, Vinylethylether, Vinylglycidylether und Vinyl-n-butylether; Vinylketone, wie Vinylmethylketon, Vinylethylketon und Vinyl-n-propylketon; Vinylamine, wie N-Vinylpyrrolidin; Zuckerderivate, wie monovinylsubstituierte Arabinose.

Die hydrophilen Vinylmonomeren können jeweils einzeln oder aber als dem jeweiligen Verwendungszweck angepaßtes Gemisch, gegebenenfalls zusammen mit vernetzenden Vinylmonomeren verwendet werden. Man erhält dementsprechend auf dem Substrat eine Beschichtung aus einem Homo- oder einem Copolymerisat. Die Monomeren werden, gegebenenfalls zusammen mit den vernetzenden Vinylmonomeren, im allgemeinen als 0,1- bis 60-, vorteilhaft als 5 bis 20-gewichtsprozentige Lösungen eingesetzt. Das Lösungsmittel ist zweckmäßig Wasser. Die Lösungen brauchen keine der bekannten Polymerisationsinitiatoren oder andere für Polymerisationsverfahren bekannte Zusatzstoffe zu enthalten.

### 4.4 Die vernetzenden Vinylmonomeren (Vernetzer)

Die vernetzenden Vinylmonomeren weisen mindestens 2, gegebenenfalls auch 3 oder 4 olefinische Doppelbindungen auf. Ihre Mitverwendung führt zu dickeren und delaminationsstabileren Schichten. Vinylmonomere mit zwei olefinischen Doppelbindungen führen zu zweidimensionalen Netzwerken, während höherfunktionelle Vinylmonomere zu dreidimensionalen Netzwerken führen. Natürlich kann man auch mit zwei oder mehr verschiedenen Vernetzern arbeiten. Zweckmäßig enthalten die vernetzenden Vinylmonomeren hydrophile Gruppen, z.B. Hydroxylgruppen und bzw. oder Alkylenoxidgruppen, und sind dann gleichzeitig hydrophile und vernetzende Vinylmonomere. Wenn man den Vernetzer der Lösung des Makroinitiators zusetzt, wendet man ihn zweckmäßig in Mengen von 0,01 bis 300 Molprozent, vorteilhaft von 10 bis 150 Molprozent an, bezogen auf die Peroxygruppen des Makroinitiators. Wenn man den Vernetzer zusammen mit den hydrophilen Vinylmonomeren verwendet, setzt man ihn zweckmäßig in Mengen von 0,1 bis 50 Molprozent, vorteilhaft von 1 bis 20 Molprozent ein, bezogen auf die hydrophilen Vinylmonomeren.

Geeignete hydrophile oder hydrophobe vernetzende Vinylmonomere sind z.B. niedere Diolefine, wie 1,3-Butadien, Isopren und 1,4-Divinylbenzol; (Meth)acrylsäurederivate, wie Methylenbisacrylamid (MBAA). Ethylenglykoldimethacrylat (EGDMA), Diethylenglykoldimethacrylat. Ethylenglykoldiacrylat (EGDA), Diethylenglykoldiacrylat (DEGDA), Tetraethylenglykoldiacrylat oder -meth- acrylat, Polyethylenglykol-400-diacrylat, Polyethylenglykol-600diacrylat, Polyethylenglykol-1000-diacrylat. Trimethylolpropantriacrylat, Trimethylolpropantrimethacrylat und Pentaerythrittetratraacrylat; Polyvinylether, wie Diethylenglykoldivinylether, Polyethylenglykol-300-divinylether, Polyethylenglykol -1500-divinylether, Polyethylenglykol-6000-divinylether, Cyclohexan-1,4-dimethanoldivinylether, 1,4-Hexandioldivinylether, Glycerin-12E0-trivinylether, Pentaerythrittriallylether und Pentaerythrit-64E0-tetravinylether; Kohlenhydratderivate, wie acryloylierte Hydroxypropylzellulose mit mehr als einer Acryloylgruppe pro Molekül; und Allylverbindungen, wie Allycinnamat, Tetraethylenglykoldiallylether und Pentaerythrittetraallylether.

### 4.5 Behandlung des polymeren Substrats mit dem Makroinitiator

Zunächst wird der Makroinitiator, gegebenenfalls zusammen mit einem Vernetzer, in einem organischen Lösemittel gelöst. Geeignete Lösemittel sind z.B. Alkohole, wie Methanol, Ethanol, Propanol und Isopropanol; Ether, wie Diethylether, Tetrahydrofuran und Dioxan; Ester, wie Ethylacetat; Ketone, wie Aceton, Methylethylketon und Cyclohexanon; Kohlenwasserstoffe, wie Pentan, Hexan, Cyclohexan, Testbenzin, Benzol, Toluol oder Xylol; Carbonsäuren, wie Ameisensäure und Essigsäure; halogenierte Kohlenwasserstoffe, wie Dichlormethan, Trichlormethan und Tetrachlormethan; oder stark polare Lösemittel, wie Dimethylformamid, Dimethylacetamid und Dimethylsulfoxid. Selbstverständlich kann man auch homogene Gemische aus zwei oder mehr der genannten Lösemittel einsetzen. Das Lösemittel sollte einerseits nach der Behandlung des Substrats möglichst rasch verdampfen, aber auch das Substrat anquellen. Ein günstiges Lösemittel für eine gegebenen Kombination von Makroinitiator und polymerem Substrat läßt sich durch orientierende Versuche unschwer ermitteln.

Die Konzentration des Makroinitiators in der Lösung beträgt zweckmäßig 0,5 bis 60 Gew.-%, insbesondere 1 bis 10 Gew.-%; die Konzentration des gegebenenfals mitverwendeten Vernetzers liegt im allgemeinen in demselben Bereich. Konzentrationen im letztgenannten, engeren Bereich haben sich in der Praxis besonders bewährt und ergeben im allgemeinen in einem Durchgang zusammenhängende, das Substrat vollständig bedeckende Schichten aus dem Makroinitiator und gegebenenfalls einem Vernetzer mit Schichtdicken im nm-Bereich. Das Substrat wird mit der Lösung z.B. durch Tauchen, Streichen oder Besprühen behandelt und anschließend getrocknet, je nach Lösemittel bei Raumtemperatur oder leicht erhöhter Temperatur mit oder ohne Vakuum.

### 4.6 Beschichtung mit hydrophilen und gegebenenfalls vernetzenden Vinylmonomeren

### 4.6.1. Thermische Pfropfung

Auf das mit dem Makroinitiator behandelte Polymersubstrat wird das Vinylmonomer oder werden die Vinylmonomeren, gegebenenfalls zusammen mit einem Vernetzer, aufgebracht, zweckmäßig in gelöster Form und wiederum z.B. durch Tauchen, Streichen oder Sprühen. Das auf diese Weise beschichtete Substrat wird dann, je nach Makroinitiator, unter Ausschluß von Luftsauerstoff auf 30 bis 130°C, vorzugsweise auf 50 bis 90°C erhitzt, wodurch die Pfropfpolymerisation ausgelöst wird. Alternativ kann man das Substrat mit dem Makroimtiator auch in das/die Vinylmonomer(en) eintauchen und im getauchten Zustand auf die genannten Temperaturen erhitzen.

Als Lösemittel für die hydrophilen Vinylmonomeren und gegebenenfalls für hydrophile Vernetzer haben sich Wasser und Wasser-Ethanol-Gemische bewährt, doch sind auch andere Lösemittel verwendbar. sofern sie ein ausreichendes Lösevermogen für das Vinylmonomer oder die Vinylmonomeren und gegebenenfalls den Vernetzer besitzen. Je nach Löslichkeit der Monomeren und nach gewünschter Schichtdicke können die Konzentrationen der Vinylmonomeren und gegebenenfalls des Vernetzers in der Lösung zusammen 0,1 bis 40 Gew.-%, vorzugsweise 1 bis 10 Gew.-% betragen. Die letztgenannten Konzentrationen haben sich in der Praxis besonders bewährt und ergeben im allgemeinen in einem Durchgang zusammenhängende, den Makroinitiator vollständig bedeckende Schichten mit Schichtdicken im nm-Bereich.

## 4.6.2 Photoinitiierte Pfropfung

Als Variante zur thermischen Pfropfung der Vinylmonomeren auf den Makroinitiator ist auch die photoinitiierte Pfropfung möglich. Dabei werden die Vinylmonomeren, gegebenenfalls zusammen mit einem Vernetzer, auf das mit dem Makroinitiator behandelte Substrat aufgebracht, wie beschrieben, und die beschichteten Substrate werden dann bestrahlt. Alternativ können die Substrate auch im getauchten Zustand bestrahlt werden. Die Temperatur liegt in beiden Fällen vorteilhaft bei 20 bis 60°C.

Die Bestrahlung erfolgt zweckmäßig mit Strahlen im langwelligen Segment des sichtbaren Bereiches oder im langwelligen UV-Bereich. Gut geeignet sind Strahlen mit Wellenlängen von 260 bis 500 nm. vorzugsweise von 290 bis 320 nm. Strahlen im genannten Wellenlängenbereich sind relativ weich und selektiv bezüglich der Polymerisation und greifen weder das polymere Substrat noch das Polymergerüst des Makroinitiators an. Besonders geeignete Strahlungsquellen sind Excimer-UV-Strahler (Fa. Heraeus, D-63801 Kleinostheim) mit kontinuierlicher Strahlung, z.B. mit XeCl oder XeF als Strahlermedium. Im Prinzip sind auch Quecksilberdampflampen mit breitem UV-Spektrum und Strahlungsanteilen im sichtbaren bzw. im obengenannten Bereich brauchbar, die Expositionszeiten betragen im allgemeinen 10 Sekunden bis 30 Minuten, vorzugsweise 1 bis 15 Minuten bei Strahlungsintensitäten im Bereich von 30 bis 200 mW/cm$^2$.

## 5. Verwendung der hydrophil beschichteten Polymersubstrate

Erzeugnisse mit einer nach dem Verfahren der Erfindung ganz oder teilweise hydrophil beschichteten Oberfläche sind Gegenstand der vorliegenden Erfindung und eignen sich zur Verwendung für technische. medizinische oder biotechnische Zwecke, wie sie zuvor erwähnt wurden. Solche Erzeugnisse sind z.B. Katheter, Schläuche, Stents, Tubusse, Blutbeutel, Sonden, Membranen und Kontaktlinsen. Wenn es bei der Verwendung der nach dem Verfahren der Erfindung hydrophil beschichteten Substrate auf Monomerenfreiheit ankommt, ist es zweckmäßig, die Restmonomeren aus der polymeren hydrophilen Beschichtung zu extrahieren. Dies kann mit Wasser und anschließend mit einem organischen Lösungsmittel geschehen, z.B. mit Kohlenwasserstoffen, wie Hexan oder Cyclohexan. und/oder mit einem Alkanol mit 1 bis 4 Kohlenstoffatomen, wie Ethanol und n-Propanol.

Ein Maß für die hydrophilierende Wirkung des Verfahrens der Erfindung ist die Veränderung des Kontaktwinkels eines Wassertropfens oder einer Luftblase. Beispielsweise wird unterhalb der von Wasser umgebenen Probe eine Luftblase erzeugt, die zur Probe aufsteigt und diese in Abhängigkeit von deren Hydrophilie benetzt. Ein solches Verfahren wurde von R.J.Good et al., Techniques of Measuring Contact Angles in Surface and Colloid Science (Hrsg. R. J.Good), Vol. 11, Plenum Press New York, N.Y., 1979 beschrieben. In den folgenden Beispielen wurden die Kontaktwinkel nach dieser Vorschrift bei 25°C gemessen.

Ein anderes Maß für die Hydrophilierung ist der Reibungskoeffizient µ. Je kleiner der Reibungskoeffizient in wäßrigem Medium, um so stärker hydrophil ist die Beschichtung des Substrats. Der Reibungskoeffizient wird bei Platten oder Folien in Anlehnung an DIN 53375 bestimmt. Bei Schläuchen erfolgt die Bestimmung in der Weise, daß der zu vermessende Schlauch in einen feststehenden Führungsschlauch eingeführt wird. Auf das eine Ende des zu vermessenden Schlauches wirkt ein Gewicht von 33,59 g, das andere Ende wird mit einer Zugprüfmaschine (Schenk Trebel RM 50 Dreiraum, PMN = 1051) in Verbindung gebracht. Das gesamte Schlauch-Schlauch-System steht in Kontakt mit Wasser. Der zu vermessende Schlauch wird mit einer Geschwindigkeit von 100 mm/min durch den Führungsschlauch gezogen, und die dafür benötigte Kraft wird aufgezeichnet. Der Reibungskoeffizient µ ergibt sich nach der Eulerschen Seilgleichung aus der Reibungskraft F und der Normalkraft W:

$$\mu = \ln (F/W)/\pi$$

Die folgenden Beispiele sollen die Erfindung weiter erläutern, nicht aber deren Umfang begrenzen, wie er in den Patentansprüchen definiert ist.

Beispiele

Eingesetzte Polymersubstrate

Tabelle 1a -

| Folien | | | |
|--------|--------|-------------|-------------|
| Folien-Nr. | Polymer | Name. Quelle | Herstellung |
| F1 | Polyamid 12 | VESTAMID, HÜLS AG | Extrudieren |
| F2 | Polystyrol | VESTYRON, HÜLS AG | Pressen |
| F3 | Polyurethan | PELLETHANE 2363-A, DOW CHEMICAL COMPANY | Extrudieren |
| F4 | Polyetherblockamid | VESTAMID. HÜLS AG, | Extrudieren |
| F5 | Polyethylen | VESTOLEN A, VESTOLEN GmbH | Extrudieren |
| F6 | Polypropylen | VESTOLEN P, VESTOLEN GmbH | Extrudieren |
| F7 | Polyorganosiloxan | NG 37-52, SILICON GmbH; D-01612 Nünchritz | Rakeln |
| F8 | PVC | VESTOLIT P + DEHP, VESTOLIT GmbH | Brabandern |
| F9 | PTFE | HOSTAFLON, HOECHST AG | Extrudieren |
| F10 | Polyurethan | TECOFLEX, THERMEDIX | Extrudieren |

Tabelle 1b -

| Schläuche | | | |
|-----------|---------|------------|-------------|
| Schlauch-Nr | Polymer | Name, Quelle | Herstellung |
| Sch1 | Polyethylen | VESTOLEN A, VESTOLEN GmbH | Extrudieren |
| Sch2 | Polyetherblockamid | PEBAX 5533, ATOCHEM S.A. | Extrudieren |
| Sch3 | Polyamid | VESTAMID, HÜLS AG | Extrudieren |
| Sch4 | Polyurethan | TECOFLEX, THERMEDIX GmbH | Extrudieren |
| Sch5 | Polyethylen | PELLETHANE 2363-A, DOW CHEMICAL CO. | Extrudieren |

**Die verwendeten Makroinitiatoren**

Als Makroinitiatoren werden Polymere mit Peroxyestergruppen verwendet. Sie werden als 5 Gew.-% Lösungen in den in Tabelle 2 genannten Lösemitteln eingesetzt.

Tabelle 2

| Verwendete Makroinitiatoren | | | | |
|------------------|----------------|---------------|---------------------|------------|
| Makroinitiatorbezeichnung | Copolymer aus | Perestergehalt | Polymerisationsgrad | Lösemittel |
| M1 | Propen-Maleinsäure[1] | 10,8% | 140 | Isopropanol/ Aceton 30:1 |
| M2 | α-Methylstyrol Maleinsäure[1] | 15,1% | 270 | THF/Aceton/ $H_2O$; 1:1:4 |
| M3 | Ethen-Maleinsäure[1] | 15,3% | 95 | i-Propanol/ $H_2O$/THF 5:5:1 |

[1] aus DE 40 34 901

Tabelle 2   (fortgesetzt)

| Verwendete Makroinitiatoren | | | | |
|---|---|---|---|---|
| Makroinitiatorbezeichnung | Copolymer aus | Perestergehalt | Polymerisationsgrad | Lösemittel |
| M4 | Propen-Maleinsäure[1] | 20,3% | 120 | i-Propanol/ Aceton; 30:1 |
| M5 | Ethen-Acrylsäure (4:1) [2] | 20,0 % | 140 | THF/Aceton 3:1 |
| M6 | Vinylether-Maleinsäureanhydrid[2] | 45,0% | 150 | DMF |
| M7 | Ethen-Maleinsäureanhydrid[2] | 53,0 % | 260 | n-Propanol/ MEK; 10:1 |
| M8 | Styrol-Acrylsäure (4:1) [1] | 19,0 % | 130 | i-Propanol/ Aceton 30:1 |
| M9 | Ethen-Maleinsäure, umges. m. Heptadecylsuccinimid | 21% | 190 | Dioxan |
| M10 | $\alpha$-Octadecen-Maleinsäureanhydrid | 17,0 % | 220 | i-Propanol |
| M11 | $\alpha$-Dodecen-Maleinsäureanhydrid | 15,0 % | 170 | i-Propanol/ Aceton 20:1 |
| M12 | $C_{20}$-$\alpha$-Olefin Maleinsäureanhydrid | 21% | 190 | Ethanol |

[1] aus DE 40 34 901

[2] aus DE-OS 22 42 818

**Die verwendeten Vinylmonomeren einschließlich Vernetzer**

Von den in Tabelle 3 aufgeführten Monomeren wurden jeweils (a) 5 gew.-%ige wäßrige Lösungen, (b) 5 gew.-%ige Isopropanol-Lösungen oder (c) 5 gew.-%ige Aceton/THF/Wasser(4:4:1)-Lösungen hergestellt.

Tabelle 3 -

| Verwendete Vinylmonomere | |
|---|---|
| Lösungsbezeichnung | Vinylmonomer |
| V1 | Natriumstyrolsulfonat |
| V2 | Acrylsäure |
| V3 | Hydroxyethylmethacrylat |
| V4 | Hydroxyethylacrylat |
| V5 | Maleinsäuremonobutylester |
| V6 | Maleinsäure |
| V7 | Natriumvinylsulfonat |
| V8 | Polyethylenglykol(1000)-dimethacrylat[1] |
| V9 | Diethylenglykolmethacrylat |
| V10 | Methylenbisacrylamid[1] |
| V11 | Acrylnitril |
| V12 | Acrylamid |

[1] zugleich Vernetzer

Tabelle 3 -   (fortgesetzt)

| Verwendete Vinylmonomere | |
| --- | --- |
| Lösungsbezeichnung | Vinylmonomer |
| V13 | Pentaerythrittriallylether[1] |
| V14 | Ethylenglykoldimethacrylat[1] |

[1] zugleich Vernetzer

**Beschichtungsverfahren**

Nach Fixierung des Makroinitiators und gegebenenfalls eines Vernetzers durch Tauchen in dessen bzw. deren Lösung und Trocknen werden die Vinylmonomeren, gegebenenfalls zusammen mit einem Vernetzer, auf die folgende Art und Weise auf die Makroinitiatorschicht aufgebracht.

Tabelle 4 -

| Beschichtungsverfahren für Makroinitiator und gegebenenfalls Vernetzer | |
| --- | --- |
| Besehtchtungskennzeichen | Beschichtungsverfahren |
| BV1 | Tauchen |
| BV2 | Sprühen |
| BV3 | Streichen |
| BV4 | in getauchtem Zustand fixieren |

**Beschichtungsversuche**

In der Tabelle 5 sind die Ergebnisse von Beschichtungsversuchen mit unterschiedlichen Makroinitiatoren, unterschiedlichen Vinylmonomeren einschließlich Vernetzern und unterschiedlichen Beschichtungsverfahren sowie die daraus resultierenden Kontaktwinkel und/oder Reibungskoeffizienten aufgeführt. Man sieht, daß die erfindungsgemäß beschichteten polymeren Substrate einen deutlich kleineren Kontaktwinkel bzw. Reibungskoeffizienten zeigen als die unbeschichteten, d.h. hydrophiliert sind.

Tabelle 5 · Beschichtungsversuche

| Versuch | Substrat | Makroinitiator und ggf. Ver-netzer (Ver-hältnis,Konz.) | Lösemittel für Makroinitiator | Monomer (Ver-hältnis) | Monomer losung[1] | Beschichtungsbedingungen | | | | Kontakt-winkel [°] | Reibungsko-effizient $\mu$ |
|---|---|---|---|---|---|---|---|---|---|---|---|
| | | | | | | Verfah-ren | Härtung | Temperatur | Dauer | | |
| 1 | F1 | - | - | - | - | - | - | - | - | 74 | - |
| 2 | F1 | M1 | Isopropanol/ Aceton 30.1 | V1+V2 (1:3) | a | BV4 | therm. | 80°C | 180 min | 22 | - |
| 3 | F1 | M1 | Isopropanol/ Aceton 30:1 | V1+V2 (1.3) | a | BV4 | UV | 25°C | 15 min | <15 | - |
| 4 | F2 | - | - | - | - | - | - | - | - | 93 | - |
| 5 | F2 | M2 | THF/Aceton/$H_2O$ 1:1:4 | V3 | c | BV1 | therm. | 90°C | 120 min | 19 | - |
| 6 | F3 | - | - | - | - | - | - | - | - | 108 | - |
| 7 | F3 | M4 | Isopropanol/ Aceton 30:1 | V4+V9 (30:1) | b | BV2 | UV | 25°C | 4 min | 21 | - |
| 8 | F4 | - | - | - | - | - | - | - | - | 85 | - |
| 9 | F4 | M9 | Dioxan | V5 | c | BV3 | therm. | 75°C | 120 min | 23 | - |
| 10 | F5 | - | - | - | - | - | - | - | - | 95 | - |
| 11 | F5 | M7 | n-Propanol/ MEK 10:1 | V11 | a | BV4 | UV | 25°C | 3 min | 36 | - |
| 12 | F6 | - | - | - | - | - | - | - | - | 100 | - |
| 13 | F6 | M5 | THF/Aceton 3·1 | V6+V7 1:1 | c | BV3 | UV | 25°C | 15 min | 25 | - |
| 14 | F7 | - | - | - | - | - | - | - | - | 102 | - |
| 15 | F7 | M6 | DMF | V8 | b | BV1 | therm. | 80°C | 2 h | 34 | - |
| 16 | F8 | - | - | - | - | - | - | - | - | 87 | - |
| 17 | F8 | M8 | Isopropanol/ Aceton 30·1 | V12+V10 (50:1) | a | BV4 | UV | 25°C | 5 min | 24 | - |

EP 0 887 369 B1

Tabelle 5 - Beschichtungsversuche (Fortsetzung)

| Versuch | Substrat | Makroinitiator und ggf. Ver-netzer (Ver-hältnis.Konz.) | Lösemittel für Makroinitiator | Monomer (Ver-hältnis) | Monomer lösung[1] | Beschichtungsbedingungen | | | | Kontakt-winkel [°] | Reibungsko-effizient $\mu$ |
|---|---|---|---|---|---|---|---|---|---|---|---|
| | | | | | | Verfah-ren | Härtung | Temperatur | Dauer | | |
| 18 | F9 | - | - | - | - | - | - | - | - | 120 | - |
| 19 | F9 | M3 | Isopropan./H$_2$O THF 5:5:1 | V12 | c | BV2 | therm. | 85°C | 1 h | 22 | - |
| 20 | F10 | - | - | - | - | - | - | - | - | 102 | - |
| 21 | F10 | M10 | Isopropanol | V2 | a | BV4 | UV | 25°C | 10 min | 18 | - |
| 22 | F1 | M11 | Isopropanol/ Aceton 20:1 | V12 | a | BV4 | therm. | 80°C | 180 min | 20 | - |
| 23 | F10 | M12 | Ethanol | V6 | a | BV3 | UV | 25°C | 10 min | 21 | - |
| 24 | F1 | M10/V14 (2.1). (2%) | Isopropanol | V2 | a | BV4 | therm. | 90°C | 3 h | 20 | - |
| 25 | F1 | M10/V13 (1:1). (2%) | Isopropanol | V2 | a | BV4 | therm. | 90°C | 3 h | >15 | - |
| 26 | F1 | M10/V13 (1:3). (3%) | Isopropanol | V2 | a | BV4 | therm. | 90°C | 3 h | 17 | - |
| 27 | Sch2 | M10/V13 (1:1). (10%) | Isopropanol | V2 | a | BV4 | therm. | 90°C | 3 h | 18 | 0.04 |
| 28 | Sch1 | M10/V13 (1:1). (5%) | Isopropanol | V2 | a | BV4 | therm. | 90°C | 3 h | 20 | - |
| 29 | Sch3 | M10/V13 (1:1). (5%) | Isopropanol | V2 | a | BV4 | therm | 90°C | 3 h | 18 | 0.02 |
| 30 | Sch4 | M10/V13 (1:1). (5%) | Isopropanol | V2 | a (30%) | BV4 | therm. | 90°C | 30 min | 17 | 0.06 |
| 31 | Sch5 | M10/V13 (1.1). (5%) | Isopropanol | V2 | a (30%) | BV4 | therm. | 90°C | 30 min | 18 | 0.05 |

EP 0 887 369 B1

12

# EP 0 887 369 B1

**Patentansprüche**

1. Verfahren zur Hydrophilierung der Oberfläche von polymeren Substraten durch radikalische Polymerisation von hydrophilen Vinylmonomeren, **dadurch gekennzeichnet, dass** man zuvor das Substrat mit einer Lösung eines Makroinitiators mit Radikale bildenden Gruppen in Seitenketten des Polymergerüstes behandelt, wobei der Makroinitiator dabei nicht durch kovalente Bindungen mit dem Substrat verbunden wird.

2. Verfahren nach Anspruch 1, **dadurch gekennzeichnet, dass** der Makroinitiator ein Kohlenwasserstoffgerüst hat und Peroxid-. Hydroperoxid-, Perester-, oder Azogruppen enthält.

3. Verfahren nach Anspruch 2, **dadurch gekennzeichnet, dass** der Makroinitiator das Umsetzungsprodukt eines Copolymers aus einem $C_3$-$C_{40}$-$\alpha$-Olefin und Maleinsäureanhydrid mit einem Alkylhydroperoxid ist.

4. Verfahren nach Anspruch 3, **dadurch gekennzeichnet, dass** das Copolymer aus einem $C_{12}$-$C_{14}$-, $C_{16}$-$C_{18}$- oder $C_{20}$-$C_{22}$-$\alpha$-Olefin und Maleinsäureanhydrid aufgebaut ist und/oder das Alkylhydroperoxid tert.-Peroxybutanol ist.

5. Verfahren nach einem der Ansprüche 1 bis 4, **dadurch gekennzeichnet, dass** der Makroinitiator in einer 0,5 bis 60 Gew.-% Lösung in einem Lösemittel oder Lösemittelgemisch angewandt wird.

6. Verfahren nach einem der Ansprüche 1 bis 5, **dadurch gekennzeichnet, dass** man vernetzende Vinylmonomere mitverwendet, die mehr als eine, gegebenenfalls 2 bis 4 olefinische Doppelbindungen aufweisen und zusätzlich hydrophile Gruppen enthalten können.

7. Verfahren nach Anspruch 6, **dadurch gekennzeichnet, dass** die Vernetzer in der Lösung des Makroinitiators vorhanden sind und/oder zusammen mit den hydrophilen Vinylmonomeren angewandt werden.

8. Verfahren nach Anspruch 6, **dadurch gekennzeichnet, dass** die Vernetzer in der Losung des Makroinitiators vorhanden sind.

9. Verfahren nach einem der Ansprüche 1 bis 8, **dadurch gekennzeichnet, dass** die Vinylmonomeren in einer 0,1 bis 60 Gew.-% Lösung auf das mit dem Makroinitiator und gegebenenfalls einem Vernetzer behandelte polymere Substrat aufgebracht werden.

10. Verfahren nach Anspruch 9, **dadurch gekennzeichnet, dass** die Vinylmonomeren bei 30 bis 130 °C thermisch initiiert auf den Makroinitiator gepfropft werden.

11. Verfahren nach Anspruch 9, **dadurch gekennzeichnet, dass** die Vinylmonomeren bei 20 bis 60 °C photoinitiiert auf den Makroinitiator gepfropft werden.

12. Verfahren nach einem der Ansprüche 1 bis 11, **dadurch gekennzeichnet, dass** die polymeren Substrate in Form von Platten, Folien, Röhren oder Schläuchen vorliegen.

13. Erzeugnisse mit Oberflächen, die nach dem Verfahren eines der Ansprüche 1 bis 12 beschichtet wurden.

14. Erzeugnisse nach Anspruch 13, **dadurch gekennzeichnet**, das die Erzeugnisse Katheter, Schläuche, Stents, Tubusse, Blutbeutel, Sonden, Membranen oder Kontaktlinsen sind.

15. Verwendung von Erzeugnissen mit nach dem Verfahren eines der Ansprüche 1 bis 12 hydrophilierten Oberflächen für technische oder biotechnische Zwecke.

**Claims**

1. Process for hydrophilizing surfaces of polymeric substrates using free radical polymerization of hydrophilic vinyl monomers as claimed, wherein the polymeric substrate is treated beforehand with a solution of a macroinitiator having free-radical-forming groups in side chains of the polymer framework and the macroinitiator is no covalent attached to the substrate.

**2.** Process as claimed in claim 1, wherein the macroinitiator has a carbon framework and contains peroxide, hydroperoxide, pereseter or azo gruops.

**3.** Process as claimed in claim 2, wherein the macroinitiator is the product of the reaction of a copolymer of a $C_3$-$C_{40}$-$\alpha$-olefin and maleic anhydride with an alkyl hydroperoxide.

**4.** Process as claimed in claim 3, wherein the copolymer contains $C_{12}$-$C_{14}$-, $C_{16}$-$C_{18}$- or $C_{20}$-$C_{22}$-$\alpha$-olefin and maleic anhydride and/or the alkyl hydroperoxide is tert-peroxybutanol.

**5.** Process as claimed in one of claims 1-4, wherein the macroinitiator solution comprises 0.5 to 60% by weight of macroinitiator based of the weight of the solution.

**6.** Process as claimed in one of claims 1-5, wherein the used crosslinking vinyl monomers have at least 2, and more preferably 2-4 olefinic double bonds and may contain additional hydrophilic groups.

**7.** Process as claimed in claim 6, the crosslinkers are contained in the macroinitiator solution and/or are used together with hydrophilic vinyl monomers.

**8.** Process as claimed in claim 7, the crosslinkers are contained in the macroinitiator solution.

**9.** Process as claimed in one of claims 1-8, wherein the vinyl monomers solution comprises 0.1-60% by weight of vinyl monomers based on weight of the solution used for coating the macroinitiator with and without crosslinker-coated polymeric substrate.

**10.** Process as claimed in claim 9, wherein the vinyl monomers are grafted onto the makroinitiator with thermal initiation at a temperature of 30-130 °C.

**11.** Process as claimed in claim 9, wherein the vinyl monomers are grafted onto the makroinitiator with photoinitiation at a temperature of 20-60 °C

**12.** Process as claimed in one of claims 1-11, wherein the polymeric substrate is in the form of sheet, film, tube or hose.

**13.** Products with surfaces made hydrophilic by the process in one of claims 1-12.

**14.** Products as claimed in claim 13, wherein the products are catheters, hoses, stems, tubes, blood bags, probes, membranes and contact lenses.

**15.** Applications of products with surfaces made hydrophilic by the process in one of claims 1-12 for technical and biotechnical purpose.


**Revendications**

**1.** Procédé d'hydrophilisation des surfaces de substrats polymères par polymérisation par voie radicalaire de monomères vinyliques hydrophiles.
**caractérisé en ce qu'**
on traite au préalable le substrat avec une solution d'un macropromoteur ayant des groupes formateurs de radicaux dans les chaînes latérales du squelette de polymère, dans lequel le macropromoteur est pour cela, non lié par des liaisons covalentes avec le substrat.

**2.** Procédé selon la revendication 1,
**caractérisé en ce que**
le macropromoteur a un squelette hydrocarboné et renferme des groupes peroxyde, hydropéroxyde, pérester ou azo.

**3.** Procédé selon la revendication 2,
**caractérisé en ce que**
le macropromoteur est le produit de réaction d'un copolymère à base d'une $\alpha$-oléfine en $C_3$-$C_{40}$ et de l'anhydride maléique avec un alkylhydropéroxyde.

4. Procédé selon la revendication 3,
   **caractérisé en ce que**
   le copolymère est constitué d'une $\alpha$-oléfine en $C_{12}$-$C_{14}$, en $C_{16}$-$C_{18}$ ou en $C_{20}$-$C_{22}$ et d'anhydride maléique et/ou l'alkylhydropéroxyde est le terpéroxy butanol.

5. Procédé selon une des revendications 1 à 4,
   **caractérisé en ce que**
   le macropromoteur est utilisé dans une solution à 0,5 à 60% en poids dans un solvant ou dans un mélange de solvants.

6. Procédé selon l'une des revendications 1 à 5,
   **caractérisé en ce qu'**
   on utilise conjointement des monomères vinyliques réticulants qui possèdent plus d'un, le cas échéant 2 à 4 double liaisons oléfiniques et peuvent renfermer en outre des groupes hydrophiles.

7. Procédé selon la revendication 6,
   **caractérisé en ce que**
   ou co-utilise des monomères vinyliques réticulés qui ont plus d'une, 2 à éventuellement 4 doubles liaisons oléfiniques et qui en outre peuvent contenir des groupes hydrophiles.

8. Procédé selon la revendication 6,
   **caractérisé en ce que**
   les agents réticulants sont présents dans la solution du macropromoteur.

9. Procédé selon l'une des revendications 1 à 8,
   **caractérisé en ce que**
   les monomères vinyliques sont appliqués en une solution à 0,1 à 60% en poids sur le substrat polymère traité avec le macropromoteur et le cas échéant avec un agent réticulant.

10. Procédé selon la revendication 9,
    **caractérisé en ce que**
    les monomères vinyliques activés thermiquement initiés à 30 à 130°C, sont greffés sur le macropromoteur.

11. Procédé selon la revendication 9,
    **caractérisé en ce que**
    les monomères vinyliques photo - initiés à 20 à 60°C sont greffés sur le macropromoteur.

12. Procédé selon l'une des revendications 1 à 11,
    **caractérisé en ce que**
    les substrats polymères se présentent sous forme de plaques, de feuilles, de tubes ou de tuyaux.

13. Produits ayant des surfaces qui ont été enduites selon le procédé d'une des revendications 1 à 12.

14. Produits selon la revendication 13,
    **caractérisés en ce que**
    les produits sont des cathéters, des tuyaux, des stents, des tubes, des poches de sang, des sondes, des membranes ou des lentilles de contact.

15. Utilisation de produits ayant des surfaces hydrophilisées selon le procédé d'une des revendications 1 à 12, à des fins industrielles ou biotechnologiques.